# EUROPÄISCHE PATENTSCHRIFT

(11) **EP 2 049 580 B1**
(45) Veröffentlichungstag und Bekanntmachung des Hinweises auf die Patenterteilung: **03.06.2015**
(21) Anmeldenummer: 07788287.6
(22) Anmeldetag: 07.08.2007
(51) Int. Cl.: C08F 283/12, C08F 290/06, C08F 290/14, C08F 2/06, C08F 2/00, C08L 51/08, C09D 151/08, C08G 77/28

(54) **SELBSTDISPERGIERBARE SILIKONCOPOLYMERISATE UND VERFAHREN ZU DEREN HERSTELLUNG UND DEREN VERWENDUNG**
SELF-DISPERSIBLE SILICON COPOLYMERES AND METHOD FOR THE PRODUCTION AND USE THEREOF
COPOLYMÈRES DE SILICONE AUTODISPERSIBLES ET PROCÉDÉS POUR LEUR PRÉPARATION ET LEUR UTILISATION

(30) Priorität: 09.08.2006 DE 102006037270
(43) Veröffentlichungstag der Anmeldung: 22.04.2009
(73) Patentinhaber: Wacker Chemie AG, 81737 München (DE)
(72) Erfinder: HASHEMZADEH, Abdulmajid, 84508 Burgkirchen (DE)
(74) Vertreter: Schuderer, Michael
(86) Internationale Anmeldenummer: PCT/EP2007/058187
(87) Internationale Veröffentlichungsnummer: WO 2008/017671

(56) Entgegenhaltungen:
- EP-A- 0 352 339
- EP-A- 0 937 998
- EP-A1- 0 810 243
- DE-A1- 4 330 279
- DE-A1- 4 426 832
- US-A- 5 510 442

## Beschreibung

Die Erfindung betrifft in Wasser selbstdispergierbare, hochtransparente Silikonorganocopolymere sowie deren Herstellung aus Organomonomeren, Silikonmakrömeren und wasserlöslichen Comonomeren durch radikalisch initiierte Lösungspolymerisation.

Zusammensetzungen dispergierbarer Silikonorganocopolymere sind durch Emulsionspolymerisation in wässerigem Medium erhältlich, wobei zur Stabilisierung der dabei entstehenden Dispersionen zusätzlich Emulgatoren oder Schutzkolloide erforderlich sind, wie beispielsweise in EP-A 1308468 oder EP-A 771826 beschrieben.

Auch in EP-A 614924 wird die Herstellung von Silikonorganocopolymeren mittels Emulsionspolymerisation in Wasser unter Zusatz oberflächenaktiver Substanzen beschrieben. Das darin beschriebene Verfahren ist nur auf niedermolekulare radikalisch polymerisierbare Silikonmonomere anwendbar, da bei Einsatz hochmolekularer Silikonmonomere eine Verringerung der Polymerisationsrate und darüber hinaus eine Aggregation der Polymere während der Polymerisation bzw. eine Abnahme der Stabilität der Copolymeremulsion auftritt.

In EP-A 352339 ist ein Verfahren zur Herstellung von Silikonorganocopolymeren mittels Lösungspolymerisation unter Vorlage des Silikonanteils im Lösungsmittel und kontinuierlicher Dosierung eines Gemisches aus Monomeren und öllöslichem Initiator beschrieben. Die so erhältlichen Copolymere sind allerdings nicht in Wasser dispergierbar. Um diese Copolymere zu dispergieren, sind Dispergierhilfsmittel wie Emulgatoren oder Schutzkolloiden erforderlich.

EP 0937998 offenbart Kontaktlinsenmaterial umfassend Silikonorganocopolymere hergestellt mit Polymerisation von Silikonmakromeren.

In EP-A 810243 und JP-A 05-009248 werden Silikonmakromere mit organischen Monomeren in wässriger Emulsion polymerisiert, wobei ausschließlich mit öllöslichem Initiator gearbeitet wird. Nachteilig bei Verfahren unter Initiierung mit öllöslichen Initiatoren ist die unzureichende Stabilität der daraus resultierenden Dispersionen, die sehr stark zur Phasentrennung neigen.

DE 4426832 offenbart Propfcopolymerisate erhältlich durch Umsetzung von Organosilanen oder Organopolysiloxanen mit ethylenisch ungesättigten Monomeren.

Aus US-A 5618879 ist eine Emulsionscopolymerisation einer Mischung aus Silikonmakromer und ethylenisch ungesättigtem Monomer in Gegenwart von anionischen Emulgatoren und wasserlöslichem Initiator in Wasser beschrieben. In JP-A 05-140255 ist das Silikonmakromer im Organomonomer gelöst, wird mit anionischem Emulgator in Wasser emulgiert und mit wasserlöslichem Initiator die Polymerisation gestartet. Nachteilig ist auch hierbei, dass die Verwendung oberflächenaktiver Substanzen erforderlich ist und ein erheblicher Anteil - über 20 % - des Silikonmakromers nicht copolymerisiert wird.

Den bekannten Zusammensetzungen dispergierbarer Silikonorganocopolymere ist gemeinsam, dass bei deren Herstellung durch Copolymerisation von Silikonmakromeren mit organischen Monomeren die Anwesenheit von Emulgatoren oder Schutzkolloiden erforderlich ist. Die so erhältlichen Silikonorganocopolymerzusammensetzungen neigen allerdings zur Phasenseparation. Phasenseparation während der Polymerisation führt zu trüben Polymerfilmen. Durch Migration der Emulgatoren oder Schutzkolloide in Silikonorganocopolymerzusammensetzungen werden bekanntlich die Eigenschaften der Silikonorganocopolymerzusammensetzungen hinsichtlich Wasserbeständigkeit, Adhäsion öder Stabilität negativ beeinflusst.

Ein weiteres Problem besteht in der Bereitstellung von hochtransparenten dispergierbaren Silikonorganocopolymerzusammensetzungen mit hohem Silikonanteil. Insbesondere bei der Herstellung von Silikonorganocopolymeren mit einem Silikonanteil von über 20 Gew.-% kommt es bei der radikalischen Polymerisation auf Grund der schlechten Verträglichkeit olefinhaltiger Monomere und Silikone zu Problemen durch Phasenseparation oder Gelierüng, was zur Trübung der Silikonorganocopolymere führt.

Vor diesem Hintergrund bestand die Aufgabe, selbstdispergierbare, hochtransparente Silikoncopolymere bereitzustellen, die selbst bei Silikongehalten von ≥ 20 Gew.-% ohne Emulgatoren oder Schutzkolloide in Wasser dispergierbar sind.

Gegenstand der Erfindung sind hochtransparente Silikonorganocopolymere, die unter Ausschluss von Emulgatoren oder Schutzkolloiden in Wasser selbstdispergierbar sind, erhältlich mittels radikalisch initiierter Lösungspolymerisation von den Komponenten als in den Ansprüchen definiert.

Bevorzugte Lösungsmittel oder bevorzugte Lösungsmittelkomponenten in Lösungsmittelgemischen sind aliphatische Alkohole mit 1 bis 6-C-Atomen wie beispielsweise Methanol, Ethanol oder Propanol, besonders bevorzugt ist i-Propanol. Besonders bevorzugt sind Gemische von Lösungsmitteln bestehend aus i-Propanol und einem oder mehreren Lösungsmitteln ausgewählt aus der Gruppe der Alkohole mit 1 bis 6-C-Atomen. Am meisten bevorzugte Lösungsmittelgemische sind i-Propanol und Ethanol oder i-Propanol und Propanol.

Bevorzugt sind auch Gemische aus Wasser und einem oder mehreren Alkoholen mit 1 bis 6-C-Atomen. Besonders bevorzugt sind auch Gemische aus i-Propanol und Wasser, bevorzugt mit einem Wasseranteil von 2-35 Gew.-% und am meisten bevorzugt mit einem Wasseranteil von 10-25 Gew.-%, jeweils bezogen auf das Gesamtgewicht der Lösungsmittelgemische.

Bei der Herstellung von Silikonorganocopolymeren mit Silikongehalten von ≥ 20 Gew.-% bezogen auf das Gesamtgewicht der Komponenten a) bis c) werden bevorzugt Lösungsmittel oder Lösungsmittelgemische eingesetzt, die Nicht-Löser für Silikonmakromer b) und Löser für die Monomere a) und c) sind. Silikonmakromer b) ist darin mit weniger als 5 Gew.-%, und die Monomere a) und c) sind darin jeweils mit mehr als 5 Gew.-% unter Normalbedingungen (23/50) nach DIN50014 löslich.

Ein bevorzugtes Lösungsmittel bei der Herstellung von Silikonorgänocopolymeren mit Silikongehalten von ≥ 20 Gew.-% ist i-Propanol. Bevorzugt sind hierfür auch Gemische von Lösungsmitteln bestehend aus i-Propanol und einem oder mehreren Lösungsmitteln ausgewählt aus der Gruppe umfassend Alkohole mit 1 bis 6-C-Atomen und Wasser. Besonders bevorzugte Lösungsmittelgemische sind i-Propanol und Ethanol oder i-Propanol und Propanol oder i-Propanol und Wasser.

Bei der Polymerisation werden als ethylenisch ungesättigte Organomonomere a) bevorzugt ein oder mehrere Monomere eingesetzt aus der Gruppe umfassend Vinylester von unverzweigten oder verzweigten Alkylcarbonsäuren mit 1 bis 15 C-Atomen, Methacrylsäureester und Acrylsäureester von unverzweigten oder verzweigten Alkoholen mit 1 bis 15 C-Atomen, Vinylaromaten, Olefine, Diene und Vinylhalogenide.

Im Allgemeinen werden 5 bis 95 Gew.-% ethylenisch ungesättigte Organomonomere a) eingesetzt, bevorzugt 20 bis 95 Gew.-%, und besonders bevorzugt 35-75 Gew.-%, jeweils bezogen auf das Gesamtgewicht der Komponenten a) bis c).

Bevorzugte Vinylester sind Vinylester von unverzweigten oder verzweigten Carbonsäuren mit 1 bis 15 C-Atomen. Besonders bevorzugte Vinylester sind Vinylacetat, Vinylpropionat, Vinylbutylat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beilspielsweise VeoVa5^{R}, VeoVa9^{R}, VeoVa10^{R} oder VeoVa11^{R} (Handelsnamen der Firma Shell). Am meisten bevorzugt ist Vinylacetat.

Bevorzugte Organomonomere a) aus der Gruppe der Ester der Acrylsäure oder Methacrylsäure sind Ester von unverzweigten oder verzweigten Alkoholen mit 1 bis 15 C-Atomen. Besonders bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Am meisten bevorzugt sind Methylacrylat, Methylmethacrylat, n-, iso- und t-Butylacrylat, 2-Ethylhexylacrylat und Norbornylacrylat.

Bevorzugte Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Bevorzugt copolymerisierte Organomonomere a) sind Vinylacetat und weitere Vinylester ausgewählt aus der Gruppe umfassend Vinyllaurat, Vinylpivalat, Vinyl-2-ethylhexansäureester, Vinylester alpha-verzweigter Carbonsäuren wie Versaticsäurevinylester (VeoVa9^{R}, VeoVa10^{R});
Vinylacetat und Ethylen, welchen gegebenenfalls noch weitere Vinylester ausgewählt aus der Gruppe umfassend Vinyllaurat, Vinylpivalat, Vinyl-2-ethylhexansäureester, Fumarsäurediester Maleinsäurediester, Vinylester alpha-verzweigter Carbonsäuren wie Versaticsäurevinylester .(VeoVa9^{R}, VeoVa10^{R}) copolymerisiert werden;
Ethylen und Vinylchlorid und ein oder mehrere Vinylester ausgewählt aus der Gruppe umfassend Vinylacetat, Vinylpropionat, Vinyllaurat, Vinylpivalat, Vinyl-2-ethylhexansäureester, Vinylester alpha-verzweigter Carbonsäuren wie Versaticsäurevinylester (VeoVa9^{R}, VeoVa10^{R}) ;
ein oder mehrere Vinylester und ein oder mehrere Acrylsäureester und gegebenenfalls Ethylen, wobei Vinylester ausgewählt werden aus der Gruppe umfassend Vinylacetat, Vinyllaurat, Versaticsäure-Vinylester (VeoVa9^{R}, VeoVa10^{R}) und wobei Acrylsäureester ausgewählt werden aus der Gruppe umfassend Butylacrylat, 2-Ethylhexylacrylat;
mehrere Acrylsäureester und gegebenenfalls 1,3-Butadien, wobei Acrylsäureester ausgewählt werden aus der Gruppe umfassend Methylmethacrylat, Butylacrylat, n-Butylacrylat, 2-Ethylhexylacrylat;
Styrol und ein oder mehrer Monomere ausgewählt aus der Gruppe umfassend 1,3-Butadien, (Meth)acrylsäureester, Methylmethacrylat, Butylacrylat, 2-Ethylhexylacrylat, n-Butylacrylat, iso-Butylacrylat und tert-Butylacrylat.

Bevorzugte Silikonmakromere b) sind lineare, verzweigte, cyclische und dreidimensional vernetzte Silikone (Polysiloxane) mit mindestens 10 Siloxanwiederholungseinheiten und mit mindestens einer radikalisch polymerisierbaren funktionellen Gruppe. Vorzugsweise beträgt die Kettenlänge 10 bis 1000 Siloxanwiederholungse.änheiten. Besonders bevorzugt beträgt die Kettenlänge 25 bis 1000 Siloxanwiederholungseinheiten. Ethylenisch ungesättigte Gruppen wie Alkenylgruppen werden als polymerisierbare, funktionelle Gruppen bevorzugt. Der Silikonanteil im Mischpolymerisat beträgt vorzugsweise 5 bis 70 Gew.-%, besonders bevorzugt 15 bis 60 Gew.-%, am meisten bevorzugt 25 bis 60 Gew.-%, jeweils bezogen auf das Gesamtgewicht der Komponenten a) bis c).

Bevorzugte Silikorimakromere b) sind Silikone mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000 beträgt.

In der allgemeinen Formel R¹ₐR₃₋ₐSiO(SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, Acryloxymethyl- und 3-Acryloxypropyl-Gruppe.

Bevorzugt werden α,ω-Divinyl-Polydimethylsiloxane, α,ω-Di-(3-acryloxypropyl)-Polydimethylsiloxane, α,ω-Di-(3-methacryloxy-propyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α,ω-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butylrest.

Bevorzugt sind auch Gemische von linearen oder verzweigten Divinyl-Polydimethylsiloxanen mit linearen oder verzweigten Monovinyl-Polydimethylsiloxanen und/oder nicht funktionalisierten Polydimethylsiloxanen (letztere besitzen keine polymerisierbare Gruppe). Die Vinylgruppen befinden sich am Kettenende. Beispiele für solche Gemische sind Silikone der lösemittelfreien Dehesive^{®}-6-Reihe (verzweigt) oder Dehesive^{®}-9-Reihe (unverzweigt) der Wacker Chemie AG. Bei den binären oder ternären Gemischen beträgt der Anteil der unfunktionellen Polydialkylsiloxane bis zu 15 Gew.-%, vorzugsweise bis zu 5 Gew.-%; der Anteil der monofunktionellen Polydialkylsiloxane bis zu 50 Gew.-%; und der Anteil der difunktionellen Polydialkylsiloxane mindestens 50 Gew.-%, vorzugsweise mindestens 60 Gew.-%, jeweils bezogen auf das Gesamtgewicht des Silikonmakrömers.

Am meisten bevorzugt als Silikonmakromere b) werden α,ω-Divinyl-Polydimethylsiloxane.

Bevorzugte wasserlösliche Comonomere c) sind ethylenisch lungesättigte Mono- und Dicarbonsäuren oder deren Salze, vorzugsweise Crotonsäure, Acrylsäure, Methacrylsäure, Fumarsäure und Mal - einsäure; ethylenisch ungesättigte Carbonsäureamide und - nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäüren bzw, deren Salze, vorzugsweise Vinylsulfonsäure, 2-Methyl-2-propen-1-sulfonsäure, 2-Propen-1-sulfonsäure, 2-Acrylamido-2-methyl-propansulfonsäure; ethylenisch ungesättigte kationische Monomere, vorzugsweise Diallyldimethylammoniumchlorid (DADMAC), 3-Trimethyhammoniumpropyl-(meth)acrylamidchlorid (MAPTAC), 2-Trimethylammoniumethyl(meth)acrylatchlorid; ethylenisch ungesättigte Phosphonsäuren bzw. deren Salze, vorzugsweise Vinylphosphonsäure; ethylenisch ungesättigte Hydroxyester, vorzugsweise 2-Hydroxyethylmethacrylat, Hydroxypropylmetacrylat, 2-Hydroxyethylacrylat, Hydroxypropylacrylat, Glycerin-1-allylether; ethylenisch ungesättigte aminofünktionelle Monomere, vorzugsweise 2-Dimethylaminoethylmethacrylat, 3-Dimethylaminopropylmethacrylamid, 3-Trimetylammoniumpropylmethacrylamidchlorid, 2-tert. Butylaminoethylmethacrylat, Allyl-N-(2-amonoethyl)-carbamat-hydrochlorid, Allyl-N-(6-aminohexyl)-carbamat-hydrochlorid, Allyl-N-(3-aminopropyl-)-hydrochlorid, Allylamin, Vinylpyridin.

Besonders bevorzugte wasserlösliche Comonomere c) sind Crotonsäure, Acrylsäure, Methacrylsäure, Diallyldimethylammoniumchlorid (DADMAC), 2-Methyl-2-properi-1-sulfonsäure, 2-Propen-1-sulfonsäure oder 2-Acrylamido-2-methyl-propansulfonsäure.

Im Allgemeinen werden 1 bis 30 Gew.-% wasserlösliche Comonomere c) eingesetzt, bevorzugt 2 bis 10 Gew.-%, und besonders bevorzugt 2-5 Gew.-%, bezogen auf das Gesamtgewicht der Komponenten a) bis c) eingesetzt, und bis zu 10 Gew.-%, bezogen auf das Gesamtgewicht der Organomonomere a), an polymerisierbaren Silanen oder Mercaptosilane in hydrolisierter Form.

Die Dispergierbarkeit der Silikonorganocopolymere in Wasser wird durch Wechselwirkung der polaren, funktionellen Gruppen der Comonomereinheiten c) bewirkt und hängt vom Anteil der Comonomereinheiten c) am Gesamtgewicht der Silikonorganocopolymere ab. Die Dispergierbarkeit von Silikonorganocopolymeren enthaltend saure oder basische Comonomereinheiten c), die in neutralem Wasser nicht ausreichend in ionischer Form vorliegen, kann durch Zusatz von Säuren, Basen bzw. Puffern gesteigert werden. Bei Silikonorganocopolymeren mit carboxylhaltigen Comonomereinheiten c) werden pH-Werte von ≥ 7,5 bevorzugt.

Bevorzugt sind Silikonorganocopolymerisate, welche eine oder mehrere Organomonomereinheiten a) ausgewählt aus der Gruppe umfassend Vinylacetat, Vinyllaurat, VeoVa9^{R}, VeoVa10^{R} und VeoVa11^{R}, und eine oder mehrere Silikonmakromereinheiten b) ausgewählt aus der Gruppe umfassend α,ω-Divinyl-Polydimethylsiloxan, α,ω-Di-(3-acryloxypropyl)-Polydimethylsiloxan und α,ω-Di- (3-methacryloxypropyl)-Polydimethylsiloxan, und eine oder mehrere Comonomereinheiten c) ausgewählt aus der Gruppe umfassend Crotonsäure, Vinylsulfonsäure und Diallyldimethylammoniumchlorid (DADMAC), und zusätliche Hilfsmonomereinheiten und gegebenenfalls Ethylen enthalten, wobei sich die Gewichtsanteile der einzelnen Monomere auf 100 Ges.-% addieren.

Geeignete Hilfsmonomere sind polymerisierbare Silane bzw. Mercaptosilane in hydrolisierter Form. Bevorzugt sind gamma-Acryl- bzw. gamma-Methacryloxypropyltri(alkoxy)silane, α-Methacryloxymethyltri(alkoxy)silane, gamma-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- oder Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(l-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)propylbernsteinsäureanhydridsilan. Bevorzugt werden auch 3-Mercaptopropyltriethoxysilan, 3-Mercaptopropyltrimethoxysilan und 3-Mercaptopropylmethyldimethoxysilan.

Die Hilfsmonomere werden im Allgemeinen zu einem Anteil von bis zu 10 Gew.-% bezogen auf das Gesamtgewicht der Organomonomere a) eingesetzt.

Ein weiterer Gegenstand der Erfindung ist ein Verfahren zur Herstellung hochtransparenter Silikonorganocopölymere, die unter Ausschluss von Emulgatoren oder Schutzkolloiden in Wasser selbstdispergierbar sind, erhältlich mittels radikalisch initiierter Lösungspolymerisation von den Komponenten als in den Ansprüchen definiert dadurch gekennzeichnet, dass
c) ein oder mehrere wasserlösliche Comonomere in einem organischen Lösungsmittel oder Lösungsmittelgemisch copolymerisiert werden.

Die Polymerisation wird üblicherweise in einem Temperaturintervall von 20°C bis 130°C durchgeführt, insbesondere zwischen 60°C und 90°C.

Die Polymerisation kann unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Vorzugsweise wird so vorgegangen, dass das gesamte Silikonmakromer b), Teile des Comonomers c) und Lösungsmittel vorgelegt werden und der Rest der Monomere gemeinsam oder getrennt zudosiert wird. Weiter ist bevorzugt, den Initiator teilweise, vorzugsweise zu 3 bis 50 Gew.-%, vorzulegen, und den Rest zuzudosieren. Besonders bevorzugt werden die gesamten Lösungsmittel, Silikonmakromer b) und ein Teil der Organomonomere a) und Comonomere c) vorgelegt und die Restmonomere zudosiert.

Als Batch-Verfahren werden alle Monomere, Lösungsmittel und ein Teil des Initiators vorgelegt und der Initiatorrest wird zudosiert oder stoßweise zugegeben.

Bei Einsatz von Lösungsmittelgemischen - beispielsweise bestehend aus i-Propanol und Wasser - werden bevorzugt alle Comonomere mit einem Teil des Initiators vorgelegt und der restliche Teil der wasserlöslichen Comonomere und des Initiators zudosiert.

Das Molekulargewicht der Silikonorganocopolymere und die Verteilung der wasserlöslichen Comonomereinheiten c) in den Silikonorganocopolymeren können in bekannter Weise durch Verfahrensparameter wie Dosierung einzelner Komponenten, Dosiergeschwindigkeit oder Initiatormenge beeinflusst werden.

Durch das erfindungsgemäße Verfahren können auch hochfeststoffhaltige Polymerlösungen von Silikonorganocopolymeren mit einem Festgehalt von 25 bis 90 %, bevorzugt mit einem Festgehalt von 30 bis 75 % und besonders bevorzugt mit einem Festgehalt von 30 bis 70 % erhalten werden.

Nach Abschluss der Polymerisation kann zur Restmonomerentfernung in Anwendung bekannter Methoden nachpolymerisiert werden. Flüchtige Restmonomere und weitere flüchtige Bestandteile können auch mittels Destillation oder Strippverfahren, vorzugsweise unter reduziertem Druck, entfernt werden.

Als Initiatoren werden öllösliche Initiatoren wie t-Butylperoxy-2-ethylhexanoat (TBPEH), t-Butylperoxypivalat (PPV), t-Butylperoxyneodecanoat (TBPND), Dibenzoylperoxid, t-Amylperoxypivalat (TAPPI), Di-(2-ethylhexyl)peroxydicarbonat (EHPC), 1,1-Bis(t-Butylperoxy)-3,3,5-trimethylcyclohexan und Di-(4-t-Butylcyclohexyl)peroxydicarbonat eingesetzt. Geeignete öllösliche Initiatoren sind auch Azoinitiatoren wie Azobisisobutyronitril (AIBN).

Bei der Copolymerisation mit gasförmigen Monomeren wie Ethylen und Vinylchlorid wird unter Druck gearbeitet, im Allgemeinen zwischen 1 und 100 bar_{abs.}.

Gegebenenfalls können zur Steuerung des Molekulargewichts die üblichen Regler verwendet werden, beispielsweise Alkohole wie Isopropanol, Aldehyde wie Acetaldehyd, chlorhaltige Verbindungen, Mercaptane wie n-Dodecylmercaptan, t-Dodecylmercaptan, Mercaptopropionsäure(ester).

Die Isolation der Silikonorganocopolymere durch Abtrennung von Lösungsmittel und gegebenenfalls von weiteren Bestandteilen der Reaktionsmischung erfolgt bevorzugt mittels Destillation besonders bevorzugt im Vakuum oder/und bei erhöhter Temperatur. Die Silikonorganocopolymere werden in Form eines Feststoffs erhalten. Alternativ kann das Lösungsmittel durch Wasserdampfdestilation (Strippen) entfernt werden, wodurch die Silikonorganocopolymere direkt als wässrige Dispersion erhalten werden können.

Ein weiterer Gegenstand der Erfindung sind wässerige Dispersionnen hochtransparenter Silikonorganocopolymere, die unter Ausschluss von Emulgatoren oder Schutzkolloiden in Wasser selbstdispergierbar sind, erhältlich mittels radikalisch initiierter Lösungspolymerisation von den Komponenten als in den Ansprüchen definiert, dadurch gekennzeichnet, dass
c) ein oder mehrere wasserlösliche Comonomere in einem organischen Lösungsmittel oder Lösungsmittelgemisch copolymerisiert werden, das Copolymerisat vom Lösungsmittel befreit wird, und der verbleibende Feststoff in Wasser dispergiert wird.

Wässerige Dispersionen der Silikonorganocopolymere werden hergestellt, indem Silikonorganocopolymere in fester Form in Wasser eingerührt werden. Es wird solange intensiv gerührt und durchmischt, bis eine stabile Dispersion entsteht. Bevorzugt wird hierfür warmes Wasser verwendet, besonders bevorzugt mit einer Wassertemperatur von 20-95°C, am meisten bevorzugt mit einer Wassertemperatur von 50-80°C. Die Mischung wird während des Dispergierens bei einer Temperatur zwischen 10-95°C gehalten. Als Rührer wird bevorzugt ein Ankerrührer eingesetzt.

Den wässerigen Dispersionen der Silikonorganocopolymere können Säuren, Basen oder Puffer zur Einstellung von pH-Werten zugesetzt werden.

Die wässerigen Dispersionen haben einen Gehalt an Silikonorganocopolymeren von 10 bis 40 % und bevorzugt von 20 bis 35 %.

Die in Wasser redispergierbaren Silikonorganocopolymerisate eignen sich zur Anwendung in Klebemitteln, Beschichtungsmitteln, auch als Schutzbeschichtung z.B. für Metalle, Folien, Holz oder Releasebeschichtung oder zur Papierbehandlung, z.B. im Tissue-Bereich, als Bindemittel zur Verfestigung von Fasern oder anderen partikulären Materialien. Sie können auch im Textilbereich zur Textilbehandlung, Textilbeschichtung, Textilausrüstung oder als Textil-Finishing, sowie im Bereich Fabric Care eingesetzt werden. Sie eignen sich auch als Modifizierungsmittel und als Hydrophobierungsmittel. Sie können ferner im Bereich Polish vorteilhaft eingesetzt werden. Darüberhinaus können die Dispersionen als Trennmittel verwendet werden. Geeignet sind sie auch als Bindemittel im Baubereich für Anstrich-, Klebe- und Beschichtungsmittel, beispielsweise in Fliesenklebern und Vollwärmeschutzklebemitteln, und insbesondere für die Anwendung in emissionsarmen Kunststoffdispersionsfarben und Kunststoffdispersionsputzen, sowohl für den Innenbereich wie den Außenbereich. Sie können aber auch als Additiv, z.B. bei Lacken oder bei kosmetischen Formulierungen, wie Haarsprays, Cremes oder Shampoos, verwendet werden.

Die nachfolgenden Beispiele dienen zur weiteren Erläuterung der Erfindung, ohne diese in irgendeiner Weise einzuschränken.

### Rohstoffe:

Polydimethylsiloxäne (PDMS) mit ca. 100, 133 und 177 SiOMe₂-Wiederholungseinheiten, α,ω-Divinylfunktionalisiert (VIPO 200, 300, 500). Hersteller: Wacker Chemie AG

### Beispiel 1: Organosilikoncopolymer mit Carboxylgruppe (2 Gew.-% Crotonsäure)

In einem 21-Glasrührtopf mit Ankerrührer, Rückflusskühler und Dosiereinrichtungen wurden 407.0 g i-Propanol, 274.0 g PDMS-Gemisch, 529,0 g Vinylacetat, 91,0 g Vinyllaurat, 18 g Crotonsäure und 1.6 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurde mit der Initiatordosierung (70 g i-Propanol und 4.1 g PPV) begonnen (Dosierzeit 2 Stunden). Nach Ende der Initiatordosierungen wurde noch 2 Stunden bei 75°C nachpolymerisiert. Es wurde eine klare Polymerlösung mit einem Feststoffgehalt von 65 Gew.-% und einem Silikonanteil im Polymer von 30 Gew.-% erhalten. Unter Vakuum und erhöhter Temperatur wurde i-Propanol abdestilliert.

**Redispergierung:** 20 g isoliertes Copolymer wurde mit 80 g warmem Wasser (Temperatur 50-80C) und Ammoniak in einem Becherglas vorgelegt und mit einem Ankerrührer gerührt. Während der Homogenisierung wurde der pH-Wert kontrolliert. Der pH-Wert muss in diesem Fall über 8 liegen. Nach ca. 3h erhielt man eine stabile Dispersion.

### Vergleichsbeispiel 1: 0.8 Gew.-% Crotonsäure

Es wurde analog zu Beispiel 1 vorgegangen, aber die Crotonsäurekonzentratiön von 2 Gew.-% bezogen auf den Gesamtmonomergehalt, auf 0.8 Gew.-% reduziert. Mit diesem Copolymer wurde keine Dispersion erhalten.

### Beispiel 2: Organosilikoncopolymer mit quarternisierter Stickstoffgruppe (4 Gew.-% DADMAC)

In einem 21-Glasrührtopf mit Ankerrührer, Rückflusskühler und Dosiereinrichtungen wurden 407.0 g i-Propanol, 228.0 g PDMS-Gemisch, 152,0 g Vinylacetat, und 1.6 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurden forgende Lösungen dosiert:
Dos. 1: 385 g Vinylacetat + 110 g Vinyllaurat
Dos. 2: 57 g DADMAC (Dimethyldiallylamoniumchlorid) (64%ig in Wasser)
Dos. 3: 13 g PPV + 50 g i-Propanol

Die Dosierzeit für Dos. 1 und 2 lag bei 2 Stunden und bei Dos. 3 bei 3 Stunden. Nach Ende der Dos. 3 wurde noch 1 Stunde bei 75°C nachpolymerisiert. Es wurde eine klare Polymerlösung mit einem Feststoffgehalt von 65 Gew.-% und einem Silikonanteil im Polymer von 25 Gew.-% erhalten. Unter Vakuum und erhöhter Temperatur wurde i-Propanol und Wasser abdestilliert.

**Redispergierung:** 20g isoliertes Copolymer wurde mit 80 g warmem Wasser (50-80°C) in einem Becherglas vorgelegt und mit einem Ankerrührer gerührt. Nach ca. 3h erhielt man eine stabile Dispersion.

### Beispiel 3: Organosilikoncopolymer mit quarternisierter Strickstoffgruppe (4 Gew.-% DADMAC)

In einem 21-Glasrührtopf mit Ankerrührer, Rückflusskühler-und, Dosiereinrichtungen wurden 377.0 g i-Propanol, 30 g Wässer, 228.0 g PDMS-Gemisch, 537,0 g Vinylacetat, 110 g Vinyllaurat und 1.6 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurden folgende Lösungen dosiert:
Dos. 1: 57 g DADMAC (Dimethyldiallylamoniumchlorid) (64%ig in Wasser)
Dos. 2: 13 g PPV + 50 g i-Propanol

Die Dosierzeit für Dos. 1 lag bei 2 Stunden und bei Dos. 2 bei 3 Stunden. Nach Ende der Dos. 2 wurde noch 1 Stunde bei 75°C nachpolymerisiert. Es wurde eine fast klare Polymerlösung mit einem Feststoffgehalt von 65 Gew.-% und einem Silikonanteil im Polymer von 24 Gew.-% erhalten. Unter Vakuum und erhöhter Temperatur wurde i-Propanol und Wasser abdestilliert.

**Redispergierung:** 20 g isoliertes Copolymer wurde mit 80 g warmem Wasser (50-80°C) in einem Becherglas vorgelegt und mit einem Ankerrührer gerührt. Nach ca. 3h erhielt man eine stabile Dispersion.

### Vergleichsbeispiel 2: 0.8 Gew.-% DADMAC

Es wurde analog zu Beispiel 2 vorgegangen, aber die DADMAC-Konzentration von 4 Gew.-% (bezogen auf den Gesamtmonomerge-Kalt) auf 0.8 Gew.-% reduziert. Mit diesem Copolymer wurde keine Dispersion erhalten.

### Beispiel 4: Organosilikoncopolymer mit Sulfongruppe (4 Gew.-% 2-Methyl-2-propen-1-sulfonsäure)

In einem 21-Glasrührtopf mit Ankerrührer, Rückflusskühler und Dosiereinrichtungen wurden 373.0 g i-Propanol, 229.0 g PDMS-Gemisch, 153,0 g Vinylacetat, und 1.6 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurden folgende Lösungen dosiert:
Dos. 1: 386 g Vinylacetat + 110 g Vinyllaurat
Dos. 2: 91 g 2-Methyl-2-propen-1-sulfonsäure (40%ig in Wasser)
Dos. 3: 13 g PPV + 50 g i-Propanol

Die Dosierzeit für Dos. 1 und 2 lag bei 2 Stunden und bei Dos. 3 bei 3 Stunden. Nach Ende der Dos. 3 wurde noch 1 Stunde bei 75°C nachpolymerisiert. Es wurde eine klare Polymerlösung mit einem Feststoffgehalt von 65 Gew.-% und einem Silikonanteil im Polymer von 25 Gew.-% erhalten. Unter Vakuum und erhöhter Temperatur wurde i-Propanol und Wasser abdestilliert.

**Redispergierung:** 20 g isoliertes Copolymer wurde mit 80 g warmem Wasser (50-80°C) in einem Becherglas vorgelegt und mit einem Ankerrührer gerührt. Nach ca. 3h bei Raumtemperatur erhielt man eine stabile Dispersion.

### Vergleichsbeispiel 3: Organosilikoncopolymer mit 0.8 Gew.-% 2-Methyl-2-propen-1-sulfonsäure

Es wurde analog Beispiel 4 vorgegangen, aber die Konzentration von 2-Methyl-2-propen-1-sulfonsäure wurde von 4 auf 0.8 Gew.-% reduziert (bezogen auf Gesamtmonomergehalt). Mit diesem Copolymer wurde keine Dispersion erhalten.

## Patentansprüche

1. Hochtransparente Silikonorganocopolymere, die unter Ausschluss von Emulgatoren oder Schutzkolloiden in Wasser selbstdispergierbar sind, erhältlich mittels radikalisch initiierter Lösungspolymerisation von a) einem oder mehreren ethylenisch ungesättigten Organomonomeren aus der Gruppe umfassend Vinylester von unverzweigten oder verzweigten Alkylcarbonsäuren mit 1 bis 15 C-Atomen, Methacrylsäureester und Acrylsäureester von unverzweigten oder verzweigten Alkoholen mit 1 bis 15 C-Atomen, Vinylaromaten, Olefine, Diene und Vinylhalogenide, und b) einem oder mehreren Silikonmakromeren, **dadurch gekennzeichnet, dass**
c) 1 bis 30 Gew.-%, bezogen auf das Gesamtgewicht der Komponenten a) bis c), an einem oder mehreren wasserlöslichen Comonomeren aus der Gruppe der ethylenisch ungesättigten Mono- oder Dicarbonsäuren öder deren Salze, ethylenisch ungesättigten Carbonsäureamide oder -nitrile, Mono- oder Diester der Fumarsäure, Mono- oder Diester der Maleinsäure, ethylenisch ungesättigten Sulfonsäuren oder deren Salze, ethylenisch ungesättigten Tetraalkylammoniumhalogenide, ethylenisch ungesättigten Phosphonsäuren bzw. deren Salze, ethylenisch ungesättigten Aminoverbindungen und bis zu 10 Gew.-%, bezogen auf das Gesamtgewicht der Organomonomere a), an polymerisierbaren Silanen oder Mercaptosilanen in hydrolisierter Form
in einem organischen Lösungsmittel oder Lösungsmittelgemisch copolymerisiert werden.

2. Hochtransparente Silikonorganocopolymere nach Anspruch 1, **dadurch gekennzeichnet, dass** als Lösungsmittel oder als Komponente in einem Lösungsmittelgemisch Alkohole mit 1 bis 6-C-Atomen, bevorzugt i-Propanol eingesetzt werden.

3. Hochtransparente Silikonorganocopolymere nach Anspruch 1 bis 2, **dadurch gekennzeichnet, dass** die Polymerisation in einem Lösungsmittel oder einem Lösungsmittelgemisch erfolgt, worin das Silikonmakromer b) eine Löslichkeit von weniger als 5 Gew.-% unter Normalbedingungen aufweist.

4. Hochtransparente Silikonorganocopolymere nach Anspruch 1 bis 3, **dadurch gekennzeichnet, dass** der Gehalt an Silikonmakromer b) bezogen auf das Gesamtgewicht der Komponenten a-c) ≥ 20 Gew.-% beträgt.

5. Hochtransparente Silikonorganocopolymere nach Anspruch 1 bis 4, **dadurch gekennzeichnet, dass** als ethylenisch ungesättigte Organomonomere a) Vinylacetat, oder Vinylacetat und Ethylen, oder Vinylacetat und Vinylester von α-verzweigten Monocarbonsäuren mit 5 bis 11 C-Atomen, oder Vinylacetat und VeoVa9^{R} und gegebenenfalls Ethylen, oder Vinylacetat und VeoVa10^{R} und gegebenenfalls Ethylen, oder Vinylacetat und Vinyllaurat und gegebenenfalls Ethylen, oder Ethylen und Vinylester von α-verzweigten Monocarbonsäuren mit 5 bis 11 C-Atomen eingesetzt werden.

6. Hochtransparente Silikonorganocopolymere nach Anspruch 1 bis 5, **dadurch gekennzeichnet, dass** als ethylenisch ungesättigte Organomonomere a) ein oder mehrere aus der Gruppe umfassend Ethylacrylat, Ethylmethacrylat, Propylacrylat, Propylmethacrylat, n-, iso- und t-Butylmethacrylat und besonders bevorzugt Methylacrylat, Methylmethacrylat, n-, iso- und t-Butylacrylat, 2-Ethylhexylacrylat und Norbornylacrylat eingesetzt werden.

7. Hochtransparente Silikonorganocopolymere nach Anspruch 1 bis 6, **dadurch gekennzeichnet, dass** als Silikonmakromere b) lineare, verzweigte, cyclische und dreidimensional vernetzte Silikone mit mindestens 10 Siloxanwiederholungseinheiten und mit mindestens einer radikalisch polymerisierbaren funktionellen Gruppe eingesetzt werden.

8. Hochtransparente Silikonorganocopolymere nach Anspruch 1 bis 7, **dadurch gekennzeichnet, dass** als Silikonmakromere b) ein oder mehrere aus der Gruppe umfassend α,ω-DivinylPolydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane eingesetzt werden.

9. Hochtransparente Silikonorganocopolymere nach Anspruch 1 bis 8, **dadurch gekennzeichnet, dass** als wasserlösliche Comonomere c) ein oder mehrere aus der Gruppe umfassend Crotonsäure, Acrylsäure, Methacrylsäure, Diallyldimethylammoniumchlorid (DADMAC), 2-Methyl-2-propen-1-sulfonsäure, 2-Propen-1-sulfonsäure oder 2-Acrylamido-2-methylpropansulfonsäure eingesetzt werden.

10. Verfahren zur Herstellung hochtransparenter Silikonorganocopolymere, die unter Ausschluss von Emulgatoren oder Schutzkolloiden in Wasser selbstdispergierbar sind, erhältlich mittels radikalisch initiierter Lösungspolymerisation von a) einem oder mehreren ethylenisch ungesättigten Organomonomeren aus der Gruppe umfassend Vinylester von unverzweigten oder verzweigten Alkylcarbonsäuren mit 1 bis 15 C-Atomen, Methacrylsäureester und Acrylsäureester von unverzweigten oder verzweigten Alkoholen mit 1 bis 15 C-Atomen, Vinylaromaten, Olefine, Diene und Vinylhalogenide, und b) einem oder mehreren Silikonmakromeren, **dadurch gekennzeichnet, dass**
c) 1 bis 30 Gew.-%, bezogen auf das Gesamtgewicht der Komponenten a) bis c), an einem oder mehreren wasserlöslichen Comonomeren aus der Gruppe der ethylenisch ungesättigten Mono- oder Dicarbonsäuren oder deren Salze, ethylenisch ungesättigten Carbonsäureamide oder -nitrile, Mono- oder Diester der Fumarsäure, Mono- oder Diester der Maleinsäure, ethylenisch ungesättigten Sulfonsäuren oder deren Salze, ethylenisch ungesättigten Tetraalkylammoniumhalogenide, ethylenisch ungesättigten Phosphonsäuren bzw. deren Salze, ethylenisch ungesättigten Aminoverbindungen und bis zu 10 Gew.-%, bezogen auf das Gesamtgewicht der Organomonomere a), an polymerisierbaren Silanen oder Mercaptosilanen in hydrolisierter Form
in einem organischen Lösungsmittel oder Lösungsmittelgemisch copolymerisiert werden.

11. Wässerige Dispersionen hochtransparenter Silikonorganocopolymere, die unter Ausschluss von Emulgatoren oder Schutzkolloiden in Wasser selbstdispergierbar sind, die erhältlich sind indem
hochtransparente Silikonorganocopolymere gemäß Anspruch 1 bis 9 vom Lösungsmittel befreit werden,
und der verbleibende Feststoff in Wasser dispergiert wird.

12. Verwendung hochtransparenter Silikonorganocopolymere aus Anspruch 1 bis 9 als Trenn- und Beschichtungsmittel zur Herstellung von abhäsiven Überzügen.

13. Verwendung hochtransparenter Silikonorganocopolymere aus Anspruch 1 bis 9 als Beschichtungsmittel zur Beschichtung von Textil, Papier, Folien, Holz und Metallen.

14. Verwendung hochtransparenter Silikonorganocopolymere aus Anspruch 1 bis 9 im Bautenschutz zur Herstellung von witterungsbeständigen Beschichtungen oder Dichtstoffen.

15. Verwendung hochtransparenter Silikonorganocopolymere aus Anspruch 1 bis 9 als Additiv für Lacke sowie Kosmetika, insbesondere Haarsprays und Haarfixiermittel.

## Claims

1. Highly transparent organosilicone copolymers, which with exclusion of emulsifiers or protective colloids are self-dispersible in water, obtainable by means of free-radically initiated solution polymerization of a) one or more ethylenically unsaturated organic monomers from the group encompassing vinyl esters of unbranched or branched alkylcarboxylic acids having 1 to 15 C atoms, methacrylic esters and acrylic esters of unbranched or branched alcohols having 1 to 15 C atoms, vinylaromatics, olefins, dienes and vinyl halides, and b) one or more silicone macromers, **characterized in that**
c) 1% to 30% by weight, based on the total weight of components a) to c), of one or more water-soluble comonomers from the group of ethylenically unsaturated monocarboxylic or dicarboxylic acids or their salts, ethylenically unsaturated carboxamides or carbonitriles, monoesters or diesters of fumaric acid, monoesters or diesters of maleic acid, ethylenically unsaturated sulfonic acids or their salts, ethylenically unsaturated tetraalkylammonium halides, ethylenically unsaturated phosphonic acids and/or their salts, ethylenically unsaturated amino compounds, and up to 10% by weight, based on the total weight of the organic monomers a), of polymerizable silanes or mercaptosilanes in hydrolyzed form
are copolymerized in an organic solvent or solvent mixture.

2. Highly transparent organosilicone copolymers according to Claim 1, **characterized in that** alcohols having 1 to 6 C atoms, preferably isopropanol, are used as solvent or as a component in a solvent mixture.

3. Highly transparent organosilicone copolymers according to Claim 1 to 2, **characterized in that** the polymerization takes place in a solvent or solvent mixture in which the silicone macromer b) has a solubility of less than 5% by weight under standard conditions.

4. Highly transparent organosilicone copolymers according to Claim 1 to 3, **characterized in that** the amount of silicone macromer b) present, based on the total weight of components a-c), is ≥ 20% by weight.

5. Highly transparent organosilicone copolymers according to Claim 1 to 4, **characterized in that** ethylenically unsaturated organic monomers a) used are vinyl acetate, or vinyl acetate and ethylene, or vinyl acetate and vinyl esters of α-branched monocarboxylic acids having 5 to 11 C atoms, or vinyl acetate and VeoVa9^{R} and optionally ethylene, or vinyl acetate and VeoVa10^{R} and optionally ethylene, or vinyl acetate and vinyl laurate and optionally ethylene, or ethylene and vinyl esters of α-branched monocarboxylic acids having 5 to 11 C atoms.

6. Highly transparent organosilicone copolymers according to Claim 1 to 5, **characterized in that** ethylenically unsaturated organic monomers a) used are one or more from the group encompassing ethyl acrylate, ethyl methacrylate, propyl acrylate, propyl methacrylate, n-butyl, isobutyl, and tert-butyl methacrylate, and more preferably methyl acrylate, methyl methacrylate, n-butyl, isobutyl, and tert-butyl acrylate, 2-ethylhexyl acrylate, and norbornyl acrylate.

7. Highly transparent organosilicone copolymers according Claim 1 to 6, **characterized in that** silicone macromers b) used are linear, branched, cyclic, and three-dimensionally crosslinked silicones having at least 10 repeating siloxane units and having at least one free-radically polymerizable functional group.

8. Highly transparent organosilicone copolymers according to Claim 1 to 7, **characterized in that** silicone macromers b) used are one or more from the group encompassing α,ω-divinyl-polydimethylsiloxanes, α,ω-di(3-acryloyloxypropyl)-polydimethylsiloxanes, α,ω di(3-methacryloyloxypropyl)-polydimethylsiloxanes, α-monovinyl-polydimethylsiloxanes, α-mono(3-acryloyloxypropyl)-polydimethylsiloxanes, α-mono(acryloyloxymethyl)-polydimethylsiloxanes, α-mono(3-methacryloyloxypropyl)-polydimethylsiloxanes.

9. Highly transparent organosilicone copolymers according to Claim 1 to 8, **characterized in that** water-soluble comonomers c) used are one or more from the group encompassing crotonic acid, acrylic acid, methacrylic acid, diallyldimethylammonium chloride (DADMAC), 2-methyl-2-propene-1-sulfonic acid, 2-propene-1-sulfonic acid or 2-acrylamido-2-methylpropanesulfonic acid.

10. Process for preparing highly transparent organosilicone copolymers, which with exclusion of emulsifiers or protective colloids are self-dispersible in water, obtainable by means of free-radically initiated solution polymerization of a) one or more ethylenically unsaturated organic monomers from the group encompassing vinyl esters of unbranched or branched alkylcarboxylic acids having 1 to 15 C atoms, methacrylic esters and acrylic esters of unbranched or branched alcohols having 1 to 15 C atoms, vinylaromatics, olefins, dienes and vinyl halides, and b) one or more silicone macromers, **characterized in that** c) 1% to 30% by weight, based on the total weight of components a) to c), of one or more water-soluble comonomers from the group of ethylenically unsaturated monocarboxylic or dicarboxylic acids or their salts, ethylenically unsaturated carboxamides or carbonitriles, monoesters or diesters of fumaric acid, monoesters or diesters of maleic acid, ethylenically unsaturated sulfonic acids or their salts, ethylenically unsaturated tetraalkylammonium halides, ethylenically unsaturated phosphonic acids and/or their salts, ethylenically unsaturated amino compounds, and up to 10% by weight, based on the total weight of the organic monomers a), of polymerizable silanes or mercaptosilanes in hydrolyzed form
are copolymerized in an organic solvent or solvent mixture.

11. Aqueous dispersions of highly transparent organosilicone copolymers, which with exclusion of emulsifiers or protective colloids are self-dispersible in water, which are obtainable by freeing highly transparent organosilicone copolymers according to Claim 1 to 9 from the solvent,
and dispersing the solid which remains in water.

12. Use of highly transparent organosilicone copolymers from Claim 1 to 9 as release agents and coating materials for producing abhesive coatings.

13. Use of highly transparent organosilicone copolymers from Claim 1 to 9 as coating materials for coating textile, paper, films, wood, and metals.

14. Use of highly transparent organosilicone copolymers from Claim 1 to 9 in architectural preservation for producing weathering-resistant coatings or sealants.

15. Use of highly transparent organosilicone copolymers from Claim 1 to 9 as an additive for varnishes and also cosmetics, especially hair sprays and hairsetting agents.

## Revendications

1. Copolymères organosiliconés hautement transparents, qui sont autodispersibles dans l'eau en l'absence d'émulsifiants ou de colloïdes de protection, pouvant être obtenus au moyen d'une polymérisation en solution initiée par voie radicalaire de a) un ou plusieurs organomonomères éthyléniquement insaturés du groupe comprenant les esters vinyliques d'acides alkylcarboxyliques non ramifiés ou ramifiés comprenant 1 à 15 atomes de carbone, les esters de l'acide méthacrylique et de l'acide acrylique d'alcools non ramifiés ou ramifiés comprenant 1 à 15 atomes de carbone, les aromatiques de vinyle, les oléfines, les diènes et les halogénures de vinyle, et b) un ou plusieurs macromères de silicone, **caractérisés en ce que** c) 1 à 30% en poids, par rapport au poids total des composants a) à c), d'un ou de plusieurs comonomères solubles dans l'eau du groupe des acides monocarboxyliques ou dicarboxyliques éthyléniquement insaturés ou leurs sels, des amides ou des nitriles d'acides carboxyliques éthyléniquement insaturés, des monoesters ou des diesters de l'acide fumarique, des monoesters ou des diesters de l'acide maléique, des acides sulfoniques éthyléniquement insaturés ou leurs sels, des halogénures de tétraalkylammonium éthyléniquement insaturés, des acides phosphoniques éthyléniquement insaturés ou leurs sels, des composés amino éthyléniquement insaturés, et jusqu'à 10% en poids, par rapport au poids total des organomonomères a), de silanes ou de mercaptosilanes polymérisables sous forme hydrolysée sont copolymérisés dans un solvant organique ou un mélange de solvants organique.

2. Copolymères organosiliconés hautement transparents selon la revendication 1, **caractérisés en ce qu'**on utilise, comme solvant ou comme composant dans un mélange de solvants, des alcools comprenant 1 à 6 atomes de carbone, de préférence l'i-propanol.

3. Copolymères organosiliconés hautement transparents selon les revendications 1 à 2, **caractérisés en ce que** la polymérisation a lieu dans un solvant ou un mélange de solvants, dans lequel le macromère de silicone b) présente une solubilité de moins de 5% en poids dans des conditions normales.

4. Copolymères organosiliconés hautement transparents selon les revendications 1 à 3, **caractérisés en ce que** la teneur en macromère de silicone b), par rapport au poids total des composants a-c), vaut ≥ 20% en poids.

5. Copolymères organosiliconés hautement transparents selon les revendications 1 à 4, **caractérisés en ce qu'**on utilise comme organomonomères éthyléniquement insaturés a) l'acétate de vinyle, ou l'acétate de vinyle et l'éthylène, ou l'acétate de vinyle et des esters vinyliques d'acides monocarboxyliques ramifiés en position α comprenant 5 à 11 atomes de carbone, ou l'acétate de vinyle et le VeoVa⁹R et le cas échéant l'éthylène, ou l'acétate de vinyle et le VeoVa10^{R} et le cas échéant l'éthylène, ou l'acétate de vinyle et le laurate de vinyle et le cas échéant l'éthylène, ou l'éthylène et des esters vinyliques d'acides monocarboxyliques ramifiés en position α comprenant 5 à 11 atomes de carbone.

6. Copolymères organosiliconés hautement transparents selon les revendications 1 à 5, **caractérisés en ce qu'**on utilise comme organomonomères éthyléniquement insaturés a) un ou plusieurs du groupe comprenant l'acrylate d'éthyle, le méthacrylate d'éthyle, l'acrylate de propyle, le méthacrylate de propyle, le méthacrylate de n-butyle, d'isobutyle et de t-butyle et de manière particulièrement préférée l'acrylate de méthyle, le méthacrylate de méthyle, l'acrylate de n-butyle, d'isobutyle et de t-butyle, l'acrylate de 2-éthylhexyle et l'acrylate de norbornyle.

7. Copolymères organosiliconés hautement transparents selon les revendications 1 à 6, **caractérisés en ce qu'**on utilise comme macromères de silicone b) les silicones linéaires, ramifiés, cycliques et réticulés de manière tridimensionnelle présentant au moins 10 unités récurrentes de type siloxane et présentant au moins un groupe fonctionnel polymérisable par voie radicalaire.

8. Copolymères organosiliconés hautement transparents selon les revendications 1 à 7, **caractérisés en ce qu'**on utilise comme macromères de silicone b) un ou plusieurs du groupe comprenant les α,ω-divinyl-polydiméthylsiloxanes, les α,ω-di-(3-acryloxypropyl)-polydiméthylsiloxanes, les α,ω-di-(3-méthacryloxypropyl)-polydiméthylsiloxanes, les α-monovinylpolydiméthylsiloxanes, les α-mono-(3-acryloxypropyl)-polydiméthylsiloxanes, les α-mono-(acryloxyméthyl)-polydiméthylsiloxanes, les α-mono-(3-méthacryloxypropyl)-polydiméthylsiloxanes.

9. Copolymères organosiliconés hautement transparents selon les revendications 1 à 8, **caractérisés en ce qu'**on utilise comme comonomères solubles dans l'eau c) un ou plusieurs du groupe comprenant l'acide crotonique, l'acide acrylique, l'acide méthacrylique, le chlorure de diallyldiméthylammonium (DADMAC), l'acide 2-méthyl-2-propène-1-sulfonique, l'acide 2-propène-1-sulfonique ou l'acide 2-acrylamido-2-méthylpropanesulfonique.

10. Procédé pour la préparation de copolymères organosiliconés hautement transparents, qui sont autodispersibles dans l'eau en l'absence d'émulsifiants ou de colloïdes de protection, pouvant être obtenus au moyen d'une polymérisation en solution initiée par voie radicalaire de a) un ou plusieurs organomonomères éthyléniquement insaturés du groupe comprenant les esters vinyliques d'acides alkylcarboxyliques non ramifiés ou ramifiés comprenant 1 à 15 atomes de carbone, les esters de l'acide méthacrylique et de l'acide acrylique d'alcools non ramifiés ou ramifiés comprenant 1 à 15 atomes de carbone, les aromatiques de vinyle, les oléfines, les diènes et les halogénures de vinyle, et b) un ou plusieurs macromères de silicone, **caractérisé en ce que** c) 1 à 30% en poids, par rapport au poids total des composants a) à c), d'un ou de plusieurs comonomères solubles dans l'eau du groupe des acides monocarboxyliques ou dicarboxyliques éthyléniquement insaturés ou leurs sels, des amides ou des nitriles d'acides carboxyliques éthyléniquement insaturés, des monoesters ou des diesters de l'acide fumarique, des monoesters ou des diesters de l'acide maléique, des acides sulfoniques éthyléniquement insaturés ou leurs sels, des halogénures de tétraalkylammonium éthyléniquement insaturés, des acides phosphoniques éthyléniquement insaturés ou leurs sels, des composés amino éthyléniquement insaturés, et jusqu'à 10% en poids, par rapport au poids total des organomonomères a), de silanes ou de mercaptosilanes polymérisables sous forme hydrolysée sont copolymérisés dans un solvant organique ou un mélange de solvants organiques.

11. Dispersions aqueuses de copolymères organosiliconés hautement transparents, qui sont autodispersibles dans l'eau en l'absence d'émulsifiants ou de colloïdes de protection, qui peuvent être obtenus en ce que des copolymères organosiliconés hautement transparents selon les revendications 1 à 9 sont libérés du solvant et le solide restant est dispersé dans l'eau.

12. Utilisation de copolymères organosiliconés hautement transparents selon les revendications 1 à 9 comme agent de séparation et de revêtement pour la fabrication de recouvrements antiadhésifs.

13. Utilisation de copolymères organosiliconés hautement transparents selon les revendications 1 à 9 comme agent de revêtement pour le revêtement de textile, de papier, de feuilles, de bois et de métaux.

14. Utilisation de copolymères organosiliconés hautement transparents selon les revendications 1 à 9 dans la protection des bâtiments pour la fabrication de revêtements ou de substances d'étanchéité résistant aux conditions climatiques.

15. Utilisation de copolymères organosiliconés hautement transparents selon les revendications 1 à 9 comme additif pour les laques ainsi que les cosmétiques, en particulier les sprays pour cheveux et les fixateurs pour cheveux.
